# EUROPÄISCHE PATENTSCHRIFT

(11) **EP 3 430 307 B1**
(45) Veröffentlichungstag und Bekanntmachung des Hinweises auf die Patenterteilung: **20.01.2021**
(21) Anmeldenummer: 17710925.3
(22) Anmeldetag: 15.03.2017
(51) Int. Cl.: F21S 41/153, F21S 41/663, F21S 41/675, B60Q 1/08, B60Q 1/14, G06K 9/00

(54) **KRAFTFAHRZEUG MIT WENIGSTENS EINEM SCHEINWERFER**
MOTOR VEHICLE HAVING AT LEAST ONE HEADLIGHT
VÉHICULE À MOTEUR POURVU D'AU MOINS UN PROJECTEUR

(30) Priorität: 17.03.2016 DE 102016003296
(43) Veröffentlichungstag der Anmeldung: 23.01.2019
(73) Patentinhaber: Audi AG, 85045 Ingolstadt (DE)
(72) Erfinder: FUNK, Christian, 69207 Sandhausen (DE); BARMEYER, Florenz, 02763 Zittau (DE); ARMBRUSTER, Tilman, 85055 Ingolstadt (DE); GUT, Carsten, 88662 Überlingen (DE); OMERBEGOVIC, Said, 65933 Frankfurt (DE)
(86) Internationale Anmeldenummer: PCT/EP2017/056151
(87) Internationale Veröffentlichungsnummer: WO 2017/158044

(56) Entgegenhaltungen:
- EP-A1- 2 347 931
- EP-A1- 2 957 462
- DE-A1- 19 737 653
- DE-A1-102008 044 676
- DE-A1-102011 081 382
- DE-A1-102014 111 083
- US-A1- 2007 195 270
- US-A1- 2010 073 480
- US-A1- 2011 012 511
- US-A1- 2013 343 051
- US-A1- 2015 009 694
- US-A1- 2016 073 000

## Beschreibung

Die Erfindung betrifft ein Kraftfahrzeug mit wenigstens einem Scheinwerfer zum Beleuchten eines Fahrzeugumfelds des Kraftfahrzeugs und einer Steuereinrichtung zur Steuerung des Scheinwerfers, wobei der Scheinwerfer mehrere matrixartig angeordnete Leuchtsegmente umfasst, die durch die Steuereinrichtung zur Bereitstellung einer für die einzelnen Leuchtsegmente separat vorgebbaren Leuchthelligkeit separat ansteuerbar sind, wobei der die jeweilige Leuchthelligkeit vorgebende Steuerparameter für jedes der Leuchtsegmente durch die Steuereinrichtung in wenigstens einem Rechenschritt in Abhängigkeit von Eingangsparametern berechenbar ist, die durch wenigstens eine Fahrzeugeinrichtung bereitstellbar sind.

Es ist bekannt, in Kraftfahrzeugen Scheinwerfer zu nutzen, die matrixartig angeordnete Leuchtquellen aufweisen, deren Helligkeit unabhängig voneinander steuerbar ist. Mit derartigen matrixartig angeordneten Leuchtquellen ist es möglich, eine durch den Scheinwerfer bereitgestellte Lichtverteilung flexibel an eine Fahrsituation anzupassen. Beispielsweise können durch die gleiche Matrix von Leuchtquellen die Lichtverteilungen für ein Abblendlicht und ein Fernlicht bereitgestellt werden, die Orientierung des Lichtkegels kann angepasst werden, um ein Kurvenlicht oder ähnliches zu implementieren, oder es können gezielt Bereiche von der Beleuchtung ausgenommen werden, um eine Blendung von weiteren Verkehrsteilnehmern zu vermeiden. Je höher die Anzahl der genutzten Leuchtquellen ist, desto flexibler kann eine Lichtverteilung angepasst werden Das Dokument DE102008044676 A1 offenbart ein Beleuchtungssystem für Motorräder mit einer LED-Matrix, wobei die LEDs individuell angesteuert werden.

Um einen derartigen Scheinwerfer anzusteuern wird im Kraftfahrzeug eine Steuereinrichtung vorgesehen, die Leuchthelligkeiten für jede der Leuchtquellen bestimmt und über einen Bus an die Leistungselektronik des Schweinwerfers übermittelt. Problematisch ist hierbei, dass mit steigender Anzahl der genutzten, unabhängig gesteuerten Leuchtquellen zugleich die erforderliche Rechenleistung für einen in der Steuereinrichtung genutzten Prozessor zur Bestimmung der einzelnen Leuchthelligkeiten steigt. Soll ein hochauflösendes Scheinwerfersystem genutzt werden, das 10.000, 100.000 oder mehr Leuchtsegmente aufweist, ist eine derartige Ansteuerung mit aktuell eingesetzten Prozessoren nicht möglich, da diese keine ausreichende Leistungsfähigkeit aufweisen.

Die Leistungsfähigkeit eines Prozessors kann dadurch gesteigert werden, dass seine Arbeitsgeschwindigkeit, das heißt seine Taktrate, erhöht wird. Dies resultiert jedoch in einem steigenden Energieverbrauch, steigenden Kühlanforderungen und höheren Anforderungen an die Spezifikation des Prozessors. Eine Nutzung eines höher getakteten Prozessors wäre somit technisch aufwendig und teuer.

Der Erfindung liegt daher die Aufgabe zugrunde, ein Kraftfahrzeug anzugeben, das eine demgegenüber technisch weniger aufwendige und günstiger umzusetzende Ansteuerung hochauflösender Scheinwerfersysteme ermöglicht.

Die Aufgabe wird erfindungsgemäß durch ein Kraftfahrzeug der eingangs genannten Art gelöst, wobei wenigstens der Rechenschritt oder wenigstens einer der Rechenschritte durch die Steuereinrichtung für mehrere der Leuchtsegmente parallel durchführbar ist.

Erfindungsgemäß wird ausgenutzt, dass ein Großteil der Berechnungen zur Bestimmung der jeweiligen Leuchthelligkeit eines Leuchtsegments eines Scheinwerfers, insbesondere eines hochauflösenden Scheinwerfers, unabhängig von den Berechnungen für die weiteren Leuchtsegmente ist, womit Berechnungen für mehrere Leuchtsegmente parallel durchgeführt werden können. Hierzu kann die Steuereinrichtung mehrere parallel arbeitende Recheneinheiten aufweisen, die zur Durchführung des parallel durchführbaren Rechenschritts ausgebildet sind. Die Recheneinheiten können für bestimmte Berechnungen fest verdrahtet oder zur Durchführung dieser Berechnungen programmierbar sein. Jeder der Recheneinheiten werden potentiell unterschiedlichen Eingangsdaten zugeführt, die jeweils einem der Leuchtsegmente zugeordnet sind, und aus diesen werden jeweils den jeweiligen Leuchtsegmenten zugeordnete Ausgangsdaten berechnet. Auf die Eingangsdaten kann jeweils eine gleichartige Rechenoperation angewandt werden. Dieser Fall wird gemäß der Flynnschen Klassifikation von Rechenarchitekturen auch "Single Instruction, Multiple Data", SIMD, genannt. Alternativ ist es möglich, auf die verschiedenen Eingangsdaten unterschiedliche Rechenoperationen anzuwenden. Dieser Fall wird auch "Multiple Instruction, Multiple Data", MIMD, genannt.

Die Parallelisierung kann derart durchgeführt werden, dass der parallel durchführbare Rechenschritt parallel für alle Leuchtsegmente oder für Gruppen von Leuchtsegmenten mit jeweils, insbesondere fest, vorgegebener Gruppengröße, beispielsweise jeweils für acht Leuchtsegmente, durchgeführt wird. Die Parallelisierung kann einzelne oder mehrere der Rechenschritte zur Bestimmung der Leuchthelligkeit umfassen. Das Ergebnis der mehreren Rechenschritte kann eine Matrix oder eine Grafik sein, die die Steuerparameter für jedes einzelne der Leuchtsegmente beschreibt. Das beschriebene Vorgehen ist auch auf eine farbige Ausleuchtung des Kraftfahrzeugumfelds übertragbar. In diesem Fall können beispielsweise Leuchthelligkeiten für verschiedene Leuchtfarben separat voneinander bestimmt werden. Die Ansteuerung des Scheinwerfers kann durch die Steuereinrichtung selbst erfolgen, es ist jedoch auch möglich, die Steuerparameter, beispielsweise in Form der vorangehend erläuterten Matrix oder Grafik, über einen Fahrzeugbus an eine Steuerelektronik des Scheinwerfers zu übertragen.

Die Leuchtsegmente können jeweils ein einzelnes Leuchtmittel oder mehrere gemeinsam angesteuerte Leuchtmittel umfassen. Die Leuchtmittel können beispielsweise LEDs sein. Es ist auch möglich, dass ein gemeinsames Leuchtmittel für mehrere oder alle Leuchtsegmente benutzt wird, wobei die einzelnen Leuchtsegmente Blenden aufweisen, durch die die Leuchthelligkeit in einem dem Leuchtsegment zugeordneten Raumwinkel variiert werden kann. Diese Blenden können beispielsweise als LCD-Panel oder als Mikrospiegel-Array ausgebildet sein. Der Scheinwerfer kann wenigstens 10.000 oder wenigstens 100.000 Leuchtsegmente umfassen.

Die Steuereinrichtung kann ein Grafikprozessor sein oder einen Grafikprozessor umfassen, wobei der parallel durchführbare Rechenschritt für die mehreren Leuchtsegmente durch den Grafikprozessor parallel durchführbar ist. Ein Grafikprozessor kann eine Schaltung sein, die zur Manipulation eines Bildspeichers, auch Frame Buffer genannt, optimiert ist. Jedem der Leuchtsegmente kann ein definierter Speicherbereich dieses Bildspeichers zugeordnet sein. In diesem kann der Steuerparameter gespeichert werden. Eine Scheinwerferelektronik des angesteuerten Scheinwerfers kann den Bildspeicher direkt auslesen. Hierbei kann das Auslesen des Bildspeichers mit einer festen Wiederholfrequenz erfolgen. Ähnlich wie im Bereich der Grafikdarstellung können zur Steuerung von Leuchtsegmenten mehrere Puffer genutzt werden, wobei die ermittelten Steuerparameter in einem ersten Puffer abgelegt werden und die Ansteuerung des Scheinwerfers gemäß der Steuerparameter in einem zweiten Puffer erfolgt, wobei nach der Berechnung aller Steuerparameter eines jeweiligen Leuchtbildes des Scheinwerfers die Funktionen der Puffer gewechselt werden. Wie eingangs erläutert ist es jedoch auch möglich, dass die Steuerparameter, insbesondere in Form einer Grafik oder Matrix, über einen Fahrzeugbus an die Scheinwerferelektronik übermittelt werden, wonach die Scheinwerferelektronik die Leuchtsegmente gemäß der Steuerparameter ansteuert.

Die Steuereinrichtung kann dazu eingerichtet sein, den parallel durchgeführten Rechenschritt oder wenigstens einen der parallel durchgeführten Rechenschritte durchzuführen, indem eine Rechenanweisung durch die Steuereinrichtung ausgeführt wird, die aus mehreren jeweils einem der Leuchtsegmente zugeordneten Rechenparametern parallel jeweils einen dem jeweiligen Leuchtsegment zugeordneten Ergebnisparametern ermittelt, wobei der Rechenparameter durch die Eingangsparameter vorgegeben oder aus diesen in wenigstens einem vorangehenden Rechenschritt berechnet wird und der jeweilige Steuerparameter durch den Ergebnisparameter vorgegeben oder in Abhängigkeit des Ergebnisparameters in einem nachfolgenden Rechenschritt berechnet wird. Dieses Vorgehen entspricht einem SIMD-Ansatz. Die Rechenparameter und die Ergebnisparameter können ganzzahlig oder als Fließkomma-Zahlen bereitgestellt beziehungsweise ermittelt werden. Es ist möglich, dass die Rechenanweisung mehrere dem jeweiligen Leuchtsegment zugeordnete Rechenparameter entgegennimmt und diese verarbeitet, um den jeweiligen Ergebnisparameter zu ermitteln. Die Rechenanweisung kann ein Befehl eines Befehlssatzes eines Prozessors, insbesondere eines Grafikprozessors, der Steuereinrichtung sein.

Das Ergebnis des parallel durchgeführten Rechenschritts oder wenigstens eines der parallel durchgeführten Rechenschritte kann für jedes der Leuchtsegmente von einer wenigstens eine Eigenschaft des jeweiligen Leuchtsegments beschreibenden, vorgegebenen Leuchtsegmentinformation abhängig sein. Die Leuchtsegmentinformation kann in der Steuereinrichtung gespeichert sein oder über ein Bussystem des Kraftfahrzeugs, insbesondere als Teil der Eingangsparameter, bereitgestellt werden. Die Leuchtsegmentinformation kann werkseitig vorgegeben sein und beispielsweise die Position des jeweiligen Leuchtsegments in der Matrix der Leuchtsegmente, die den Scheinwerfer bilden, beschreiben. Die Leuchtsegmentinformation kann ergänzend oder alternativ einen Raumwinkel beschreiben, der durch das Leuchtsegment ausgeleuchtet wird. Die Leuchtsegmentinformation kann im Rahmen einer Kalibrierung des Scheinwerfers, im Rahmen einer Wartung, oder automatisch unter Nutzung von Fahrzeugsensoren bestimmt werden.

Durch die Steuereinrichtung kann in Abhängigkeit der Eingangsparameter eines von mehreren vorgegebenen Leuchtmustern auswählbar sein, das einen durch die Leuchtsegmente auszuleuchtenden Raumwinkel beschreibt, wobei das Ergebnis des parallel durchgeführten Rechenschritts oder wenigstens eines der parallel durchgeführten Rechenschritte für zumindest einen Teil der Leuchtsegmente von dem gewählten Leuchtmuster abhängig ist. Ein Leuchtmuster kann beispielsweise ein Fernlicht oder ein Abblendlicht beschreiben. Im Rahmen des wenigstens einen parallel durchgeführten Rechenschritts kann für jedes der Leuchtsegmente ermittelt werden, ob es den auszuleuchtenden Raumwinkel beleuchtet oder einen außerhalb des auszuleuchtenden Raumwinkels liegenden Raumwinkel beleuchtet. Dies entspricht einer Rasterung des Leuchtmusters. Dabei ist es möglich, dass für Leuchtsegmente, deren Abstrahlwinkel vollständig innerhalb des auszuleuchtenden Raumwinkels liegt, ein erster Steuerparameter und für solche Leuchtsegmente, deren Abstrahlwinkel außerhalb des auszuleuchtenden Raumwinkels liegt, ein zweiter Steuerparameter ermittelt wird. Das Leuchtmuster kann jedoch auch so definiert werden, dass die Änderung der Leuchthelligkeit am Rand des auszuleuchtenden Raumwinkels kontinuierlich erfolgt.

Die Leuchtmuster können fest vorgegeben sein, das heißt stets zu einer gleichen Lichtverteilung des Scheinwerfers führen. Es ist jedoch auch möglich, dass die Leuchtmuster einen oder mehrere Parameter aufweisen, durch dessen Vorgabe das jeweilige Leuchtmuster anpassbar ist. Beispielsweise kann bei einem Leuchtmuster, das einem Fernlicht zugeordnet ist, ein Azimutwinkel vorgegeben werden, gemäß dem das Fernlicht in der Fahrebene zu verschwenken ist. Hierüber kann ein Kurvenlicht implementiert werden.

Durch die Fahrzeugeinrichtung können die Eingangsparameter derart vorgebbar sein, dass sie von einer momentanen und/oder einer prognostizierten zukünftigen Fahrzeugbewegung abhängende Bewegungsdaten umfassen, wobei das Ergebnis des parallel durchgeführten Rechenschritts oder wenigstens eines der parallel durchgeführten Rechenschritte für zumindest Teile der Leuchtsegmente von den Bewegungsdaten abhängig ist. Die Bewegungsdaten können beispielsweise den vorangehend erläuterten Azimutwinkel für ein Kurvenlicht beschreiben, da dieser von einer voraussichtlichen zukünftigen Fahrrichtung abhängt. Zur Bestimmung der Bewegungsdaten kann das Kraftfahrzeug eine Egodatenerfassungseinrichtung aufweisen, durch die beispielsweise der Lenkwinkel, eine Gierrate und/oder eine Geschwindigkeit des Kraftfahrzeugs erfassbar sind. Ergänzend oder alternativ kann das Kraftfahrzeug zukünftige Fahrzeugbewegungen prognostizieren, indem Umfelddaten ausgewertet werden. Dies ist beispielsweise möglich, indem die Position des Kraftfahrzeugs über eine Positionserfassungseinrichtung, beispielsweise ein satellitengestütztes Positionsbestimmungssystem, bestimmt wird und die momentane Position des Kraftfahrzeugs mit Kartendaten abgeglichen wird, um eine prognostizierte zukünftige Fahrtroute zu bestimmen. Eine entsprechende Funktionalität kann beispielsweise durch eine Navigationseinrichtung des Kraftfahrzeugs bereitgestellt werden. Es ist auch möglich, Umfelddaten, beispielsweise einen zukünftigen Straßenverlauf, durch eine Auswertung von Sensordaten von Umfeldsensoren des Kraftfahrzeugs zu gewinnen. Die Umfelddaten und Egodaten können ausgewertet werden, um die momentane oder prognostizierte Fahrzeugbewegung zu ermitteln und hieraus die Bewegungsdaten zu bestimmen.

Durch die Fahrzeugeinrichtung können die Eingangsparameter derart vorgegeben werden, dass sie für wenigstens ein relevantes Objekt im Fahrzeugumfeld jeweils eine das Objekt betreffende Objektinformation umfassen, wobei das Ergebnis des parallel durchgeführten Rechenschritts oder wenigstens eines der parallel durchgeführten Rechenschritte für zumindest einen Teil der Leuchtsegmente von der Objektinformation abhängig ist. Bei der Objektinformation kann es sich um Sensordaten eines oder mehrerer kraftfahrzeugseitiger Sensoren, beispielsweise wenigstens einer Kamera, eines Radars und/oder eines Lidars des Kraftfahrzeugs, handeln. Vorzugsweise werden Objektinformationen jedoch durch Fahrzeugsysteme bereitgestellt, die entsprechende Sensordaten verarbeiten und als Objektinformation beispielsweise einen Objekttyp, eine Objektposition im Fahrzeugumfeld und/oder einen Raumwinkel bezüglich des Scheinwerfers beziehungsweise des Kraftfahrzeugs, in dem ein entsprechendes Objekt liegt, vorgeben. Die Objektinformation kann zudem eine Beleuchtungsinformation umfassen, die beschreibt, wie ein entsprechendes Objekt zu beleuchten ist. Objektinformationen können durch eines oder mehrere Fahrzeugsysteme in Form von Objektlisten vorgegeben werden, wobei eine Objektliste Objekte umfassen kann, die durch ein entsprechendes Leuchtmuster markiert werden sollen und/oder die nicht beleuchtet werden sollen. Eine Nichtbeleuchtung von Objekten kann beispielsweise dann vorteilhaft sein, wenn eine Blendung weiterer Verkehrsteilnehmer durch ein Fernlicht vermieden werden soll. Eine Markierung von Objekten kann beispielsweise für Fußgänger oder Tiere am Straßenrand erfolgen. Verfahren zur Ermittlung von Objekten, die durch einen Scheinwerfer markiert werden sollen oder die bei einer Beleuchtung eines Umfelds nicht beleuchtet werden sollen, sind im Stand der Technik bekannt und sollen daher nicht detailliert erläutert werden.

Erfindungsgemäß können die Eingangsparameter oder durch die Steuereinrichtung aus den Eingangsparametern ermittelte 2D-Vektordaten eine 2D-Polygonliste von 2D-Polygonen einer Lichtverteilung beschreiben, wobei den 2D-Polygonen jeweils unterschiedliche Steuerparameter oder Steuerparameterverläufe zugeordnet sind, wobei durch die Steuereinrichtung der jeweilige Steuerparameter der Leuchtsegmente parallel für mehrere Leuchtsegmente aus der 2D-Polygonliste berechenbar ist. Dies entspricht einem Raster der entsprechenden 2D-Polygone, wie es aus der Grafikverarbeitung bekannt ist. Ein entsprechendes Vorgehen ist besonders dann vorteilhaft, wenn die Steuereinrichtung ein Grafikprozessor ist oder einen solchen umfasst, da diese Grafikprozessoren häufig für eine entsprechende Rasterung optimiert sind. Ein Steuerparameterverlauf kann beispielsweise beschrieben werden, indem mehrere Steuerparameter für mehrere Ecken des jeweiligen 2D-Polygons vorgegeben werden. Der Steuerparameter der einzelnen Leuchtsegmente kann durch Interpolation aus mehreren dieser Steuerparameter innerhalb des jeweiligen 2D-Polygons bestimmt werden. Die 2D-Polygone können vorzugsweise konvex sein, speziell Dreiecke. Die 2D-Polygone ergänzen sich vorzugsweise zu einer Leuchtfläche mit der gleichen geometrischen Form wie die matrixartige Anordnung der Leuchtsegmente.

Durch die Steuereinrichtung kann als Steuerparameter eine Pulsweite für eine Steuerspannung und/oder einen Steuerstrom des jeweiligen Leuchtsegments berechenbar sein. Dies ermöglicht eine besonders einfache Ausbildung einer scheinwerferseitigen Steuerelektronik, da der Steuerstrom bzw. die Steuerspannung mit dieser Pulsweite beispielsweise direkt zum Betrieb von die Leuchtsegmente bildenden LEDs oder zur Ansteuerung von den einzelnen Leuchtsegmenten zugeordneten Blenden, die vorzugsweise durch eine gemeinsame Lichtquelle in gleichem Maße beleuchtet werden, nutzbar ist. Als Blenden können einzelne LCD-Pixel oder Mikrospiegel angesteuert werden.

Weitere Vorteile und Einzelheiten der Erfindung ergeben sich aus dem folgenden Ausführungsbeispiel sowie den zugehörigen Zeichnungen. Dabei zeigen schematisch:
- Fig. 1: ein Ausführungsbeispiel eines erfindungsgemäßen Kraftfahrzeugs,
- Fig. 2: ein Leuchtpanel eines Scheinwerfers des in Fig. 1 gezeigten Kraftfahrzeugs sowie ein Beispiel für die Ansteuerung der einzelnen Leuchtsegmente des Leuchtpanels in einer Verkehrssituation, und
- Fig. 3: ein Ablaufdiagramm, das die Berechnung der Steuerparameter der einzelnen Leuchtsegmente durch die Steuereinrichtung des in Fig. 1 gezeigten Kraftfahrzeugs, zeigt.

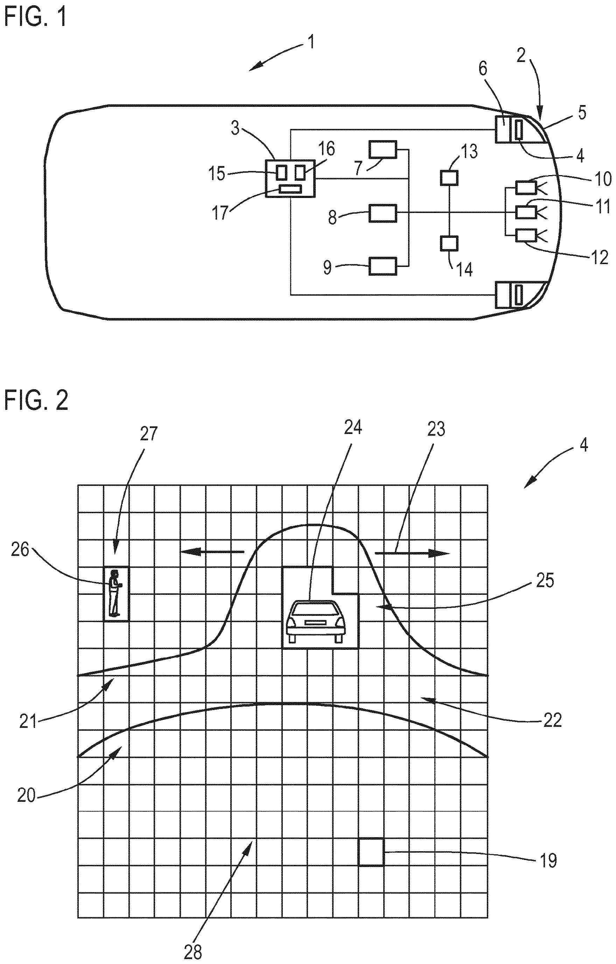

Fig. 1 zeigt ein Kraftfahrzeug 1 mit zwei Scheinwerfern 2 zum Beleuchten eines Fahrzeugumfelds des Kraftfahrzeugs 1 und einer Steuereinrichtung 3 zur Steuerung der Scheinwerferr 2. Der Scheinwerfer 2 umfasst ein Leuchtpanel 4, das, wie in Fig. 2 gezeigt ist, eine Vielzahl von matrixartig angeordneten Leuchtsegmenten 19 umfasst. Die Leuchtsegmente 19 sind durch die Steuereinrichtung 3 ansteuerbar, um eine separat für die einzelnen Leuchtsegmente 19 vorgebbare Leuchthelligkeit bereitzustellen. Die Steuereinrichtung 3 ist dazu ausgebildet, aus durch die Fahrzeugeinrichtungen 7, 8, 9 bereitgestellten Eingangsparametern die jeweilige Leuchthelligkeit für die einzelnen Leuchtsegmente 19 beschreibende Steuerparameter zu berechnen. Die Berechnung wird derart durchgeführt, dass wenigstens ein Rechenschritt durch die Steuereinrichtung 3 für mehrere der Leuchtsegmente 19 parallel durchgeführt wird. Hierzu weist die Steuereinrichtung 3 einen Grafikprozessor 15 mit einem zugeordneten Bildspeicher 16 sowie ein Businterface 17 auf. Die Fahrzeugeinrichtungen 7, 8, 9 stellen der Steuereinrichtung 3 über das Businterface 17 Eingangsparameter bereit. Aus diesen Eingangsparametern berechnet der Grafikprozessor 15 ein Leuchtbild, das für jedes der Leuchtsegmente 19 einen die jeweilige Leuchthelligkeit beschreibenden Steuerparameter, beispielsweise eine Pulsweite für eine Pulsweitenmodulation eines Stroms einer Leuchtdiode des Leuchtsegments, umfasst. Dieses Leuchtbild wird über den Fahrzeugbus an die Steuerelektronik 6 des Scheinwerfers 2 übertragen, die das Leuchtpanel 4 entsprechend ansteuert. Die durch ein jeweiliges Leuchtsegment 19 bereitgestellte Leuchthelligkeit wird durch eine Optik 5 des Scheinwerfers, insbesondere eine Streulinse, in einen dem Leuchtsegment 19 zugeordneten Raumwinkel abgestrahlt. Aus Übersichtlichkeitsgründen sind in Fig. 2 nur 256 der Leuchtsegmente 19, die in einer 16 x 16 Matrix angeordnet sind, dargestellt. Im gezeigten Kraftfahrzeug 1 wird eine Steuerung für die Leuchtsegmente 19 genutzt, die für eine Nutzung einer Vielzahl von Leuchtsegmenten, insbesondere von wenigstens 10.000 oder wenigstens 100.000 Leuchtsegmenten, optimiert ist. Die Darstellung einer relativ geringen Zahl von Leuchtsegmenten 19 erfolgt aus Übersichtlichkeitsgründen.

Die einzelnen Leuchtsegmente können jeweils eine LED als steuerbare Lichtquelle aufweisen. In alternativen Ausführungsbeispielen könnten die Leuchtsegmente auch mehrere gemeinsam angesteuerte Leuchtdioden umfassen, durch eine oder mehrere organische Leuchtdioden gebildet sein oder jeweils durch ein Blendenelement, das das Licht einer gemeinsamen Lichtquelle mit variabler Intensität passieren lässt, gebildet sein. Als Blendenelement kann beispielsweise ein LCD-Panel oder ein Mikrospiegel-Array genutzt werden.

Das Kraftfahrzeug 1 weist mehrere Fahrzeugeinrichtungen 7, 8, 9 auf, die jeweils Eingangsparameter an die Steuereinrichtung 3 bereitstellen, um eine durch den Scheinwerfer 2 abgestrahlten Lichtverteilung zu beeinflussen. Die Fahrzeugeinrichtung 7 dient der Vorgabe eines grundsätzlichen zu verwendenden Leuchtmusters sowie einer Parametrisierung dieses Leuchtmusters. Die Fahrzeugeinrichtung 7 stellt als Eingangsparameter eine Information bereit, ob ein Leuchtmuster abgestrahlt werden soll, das einem Abblendlicht entspricht, oder ein Leuchtmuster, das einem Fernlicht entspricht. Eine Auswahl zwischen Fernlicht und Abblendlicht kann manuell durch einen Fahrer erfolgen. Alternativ könnte die Fahrzeugeinrichtung 7 in Abhängigkeit von erfassten Ego- und/oder Umfelddaten selbständig ermitteln, ob ein Fernlicht oder ein Abblendlicht genutzt werden soll. Die Fahrzeugeinrichtung 7 stellt zudem Bewegungsdaten an die Steuereinrichtung 3 bereit, die von einer prognostizierten zukünftigen Fahrzeugbewegung abhängen und eine voraussichtliche Veränderung der Fahrtrichtung beschreiben. Die voraussichtliche Änderung der Fahrtrichtung kann als ein Azimutwinkel bezüglich der Fahrzeuglängsachse angegeben werden. Dieser Azimutwinkel kann zur Parametrisierung des ausgewählten Leuchtmusters genutzt werden, um im Kraftfahrzeug 1 ein Kurvenlicht zu implementieren.

Zur Prognose der Fahrzeugbewegung sowie zur im Folgenden erläuterten Bestimmung von Objektinformationen von im Kraftfahrzeugvorfeld liegenden Objekten können die Fahrzeugeinrichtungen 7, 8, 9 Egodaten, die einen Zustand des Kraftfahrzeugs 1 selbst beschreiben, und Umfelddaten, die das Fahrzeugumfeld beschreiben, auswerten. Zur Umfelddatenerfassung sind einerseits drei Sensoreinrichtungen 10, 11, 12 vorgesehen, wobei die Sensoreinrichtung 10 eine Kamera ist, die Sensoreinrichtung 11 ein Radarsensor und die Sensoreinrichtung 12 ein Lidar-Sensor. Andererseits sind Umfelddaten über das Navigationssystem 13 bereitstellbar. Durch das Navigationssystem 13 wird durch eine nicht gezeigte Positionserfassungseinrichtung eine Position des Kraftfahrzeugs 1 in Weltkoordinaten ermittelt und durch eine Auswertung von im Navigationsgerät 13 gespeicherten Kartendaten ein voraussichtlich zukünftig befahrener Streckenabschnitt prognostiziert und diesen Streckenabschnitt beschreibende Streckenabschnittsdaten werden als Teil der Umfelddaten bereitgestellt. Verfahren zur Prognose von zukünftig befahrenen Streckenabschnitten durch Navigationssysteme sind im Stand der Technik bekannt und sollen daher nicht detailliert erläutert werden.

Zur Erfassung von Egodaten des Kraftfahrzeugs, beispielsweise eines Lenkwinkels, einer Gierrate und/oder einer Geschwindigkeit des Kraftfahrzeugs, wird eine Egodatenerfassungseinrichtung 14 genutzt, die vorzugsweise einen oder mehrere Sensoren umfasst, die Egodaten des Kraftfahrzeugs erfassen.

Die Fahrzeugeinrichtung 8 dient zur Bereitstellung eines blendfreien Fernlichts. Bei einem blendfreien Fernlicht werden andere Verkehrsteilnehmer, beispielsweise Kraftfahrzeuge, im Kraftfahrzeugvorfeld erkannt und zur Vermeidung einer Blendung dieser Verkehrsteilnehmer werden Bereiche, in denen sich solche Verkehrsteilnehmer befinden, mit einer geringeren Intensität ausgeleuchtet. Der Fahrzeugeinrichtung 8 werden über den Fahrzeugbus die vorangehend erläuterten Umfelddaten bereitgestellt. Die Fahrzeugeinrichtung 8 führt in diesen Umfelddaten eine Objekterkennung durch, um Verkehrsteilnehmer, deren Blendung vermieden werden soll, zu identifizieren und ermittelt einen jeweiligen Raumwinkel, in dem sich ein solcher Verkehrsteilnehmer bezüglich des Kraftfahrzeugs 1 befinden. Die Fahrzeugeinrichtung 8 stellt eine Liste der erkannten Objekte, deren Blendung vermieden werden soll, mit den zugeordneten Raumwinkeln als Eingangsparameter an die Steuereinrichtung 3 bereit.

Die Fahrzeugeinrichtung 9 stellt eine Markierfunktion bereit, durch die bestimmte Objekte im Fahrzeugumfeld durch eine entsprechende Beleuchtung hervorgehoben werden können. Beispielsweise können Fahrspuren oder im Fahrbahnumfeld befindliche Objekte, beispielsweise Fußgänger oder Tiere, hervorgehoben werden, um dem Fahrer beim Fahren zu assistieren. Wie zur Fahrzeugeinrichtung 8 erläutert, werden die entsprechenden Objekte durch die Fahrzeugeinrichtung 9 erkannt, den Objekten werden Raumwinkel zugeordnet und es wird eine Objektliste, die die zu markierenden Objekte und die Raumwinkel, in denen diese liegen, umfasst, als Teil der Eingangsparameter an die Steuereinrichtung 3 bereitgestellt.

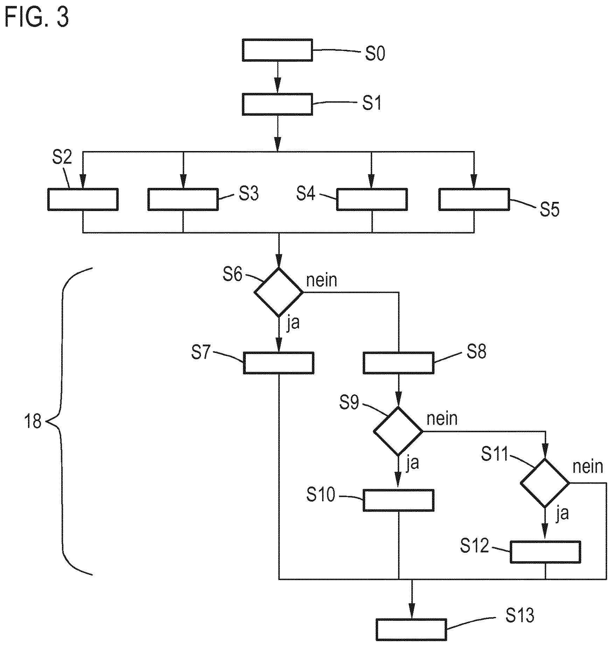

Die verschiedenen Leuchtfunktionen, die durch den Scheinwerfer 2 in Verbindung mit der Steuereinrichtung 3 bereitgestellt werden, sind in Fig. 2 schematisch dargestellt. Die Berechnung der einzelnen Steuerparameter der Leuchtsegmente 19 zur Bereitstellung dieser Leuchtfunktionen wird mit Bezug auf das in Fig. 3 dargestellte Ablaufdiagramm erläutert. Die im Abschnitt 18 des Ablaufdiagramms gezeigten Schritte werden hierbei vollständig oder teilweise parallel durchgeführt, wobei die Parallelisierung durch den Graphikprozessor 15 durch SIMD-Befehle durchgeführt wird, bei denen durch jede Rechenanweisung aus mehreren, jeweils einem der Leuchtsegmente 19 zugeordneten Rechenparametern parallel mehrere, jeweils einem der Leuchtsegmente 19 zugeordnete Ergebnisparameter ermittelt werden. Grafikprozessoren können derartige SIMD-Befehle sehr effizient durchführen.

In einem vorbereiteten Schritt S0 wird für jedes der Leuchtsegmente eine Leuchtsegmentinformation vorgegeben, die wenigstens eine Eigenschaft des entsprechenden Leuchtsegments beschreibt. Im einfachsten Fall beschreibt die Leuchtsegmentinformation die Position des jeweiligen Leuchtsegments 19 in der Matrix der Leuchtsegmente 19, also beispielsweise in welcher Zeile und welcher Spalte das entsprechende Leuchtsegment 19 liegt. Es ist jedoch auch möglich, beispielsweise im Rahmen der Kalibrierung des Scheinwerfers 2, ein Raumwinkelsegment zu bestimmen, das durch das jeweilige Leuchtsegment 19 ausgeleuchtet wird, wobei die Leuchtsegmentinformation dieses Raumwinkelsegment beschreibt. Die Leuchtsegmentinformation ermöglicht im Rahmen der parallelen Ermittlung der Steuerparameter eine Berücksichtigung der Lage des Leuchtsegments 19 im Leuchtpanel 4 und somit der "Pixelgrenzen" des Leuchtsegments 19 beziehungsweise des ausgeleuchteten Leuchtwinkels des Leuchtsegments 19.

Im Schritt S1 werden Umfelddaten und Egodaten des Kraftfahrzeugs durch die Umfelderfassungseinrichtung 10, 11, 12, das Navigationssystem 13 und die Egodatenerfassungseinrichtung 14 ermittelt, wie vorangehend beschrieben. In den Schritten S2 bis S5 werden durch die Fahrzeugeinrichtungen 7, 8, 9 aus den Egodaten und den Umfelddaten Eingangsparameter ermittelt und an die Steuereinrichtung 3 bereitgestellt. In Schritt S2 wird durch die Fahrzeugeinrichtung 7 ermittelt, ob ein Abblendlicht oder ein Fernlicht genutzt werden soll. Hierzu wird die Stellung eines Bedienelements ausgelesen. Wie eingangs erläutert wäre es auch möglich, eine entsprechende Bestimmung automatisch durchzuführen. Zudem wurde in Schritt S3 durch die Fahrzeugeinrichtung 7 die voraussichtliche zukünftige Fahrtrichtung bestimmt, wobei diese in Form eines Azimutwinkels an die Steuereinrichtung 13 bereitgestellt wird. In Abhängigkeit dieses Azimutwinkels kann die Leuchtrichtung eines Fernlichts angepasst werden, das heißt ein mögliches Leuchtmuster angepasst werden, um ein Kurvenlicht zu implementieren.

In Schritt S4 wird durch die Fahrzeugeinrichtung 8 eine Objekterkennung in den Umfelddaten durchgeführt, die durch Fusion der Sensordaten der Umfelderfassungseinrichtungen 10, 11, 12 generiert wurden. Es werden durch eine Objektklassifikation Objekte, beispielsweise das in Fig. 2 dargestellte Objekt 24, ein Kraftfahrzeug erkannt, die nicht oder mit einer geringeren Intensität beleuchtet werden sollen, um eine Blendung zu vermeiden. Erkannte Objekte werden als Objektliste gemeinsam mit einem Raumwinkel, der die Position des Objekts bezüglich des Fahrzeugs beschreibt, als Eingangsparameter an die Steuereinrichtung 3 bereitgestellt. Entsprechend ermittelt die Fahrzeugeinrichtung 9 in Schritt S5 Objekte, die durch eine Beleuchtung markiert werden sollen, beispielsweise eine befahrene Fahrspur oder das in Fig. 2 schematisch gezeigte Objekt 26, das ein Fußgänger ist.

Im Abschnitt 18 des Ablaufdiagramms, also in den Schritten S6 bis S12, werden mehrere Rechenschritte durch den Grafikprozessor 15 jeweils parallel für mehrere Leuchtsegmente 19 durchgeführt, um jeweilige Steuerparameter für die Leuchtsegmente 19 aus den Eingangsparametern in Abhängigkeit der in Schritt S0 bereitgestellten Leuchtsegmentinformation zu bestimmen. Die Parallelisierung kann für alle Leuchtsegmente oder für Gruppen von Leuchtsegmenten, beispielsweise für jeweils acht Leuchtsegmente, erfolgen. Die einzelnen Schritte S6 bis S12 der parallelen Berechnung sind im Folgenden nur für eines der Leuchtsegmente 19 erläutert, verlaufen jedoch für alle Leuchtsegmente 19 entsprechend.

In Schritt S6 wird zunächst anhand der Eingangsparameter ermittelt, welches von mehreren vorgegebenen, jedoch potentiell anpassbaren Leuchtmustern ausgegeben werden soll. Im Folgenden wird beispielhaft ein Ablauf für eine Steuereinrichtung 3 beschrieben, die nur zwei verschiedene vorgegebene Leuchtmuster bereitstellt, nämlich ein statisches Leuchtmuster für ein Abblendlicht und ein dynamisches Leuchtmuster mit zusätzlichen Lichtfunktionen für ein Fernlicht. Im Schritt S6 wird daher überprüft, ob die Eingangsparameter beschreiben, dass ein Abblendlicht genutzt werden soll. Ist dies der Fall, so wird in Schritt S7 jedem der Leuchtsegmente 19 ein jeweils vorgegebener Steuerparameter zugeordnet, so dass die Leuchtsegmente 19 im Bereich 28 unterhalb der Linie 20 mit einer vorgegebenen Helligkeit leuchten und die oberhalb der Linie 20 liegenden Leuchtsegmente 19 in Fig. 2 im Wesentlichen eine Leuchthelligkeit von 0 aufweisen. Das Verfahren wird anschließend direkt mit Schritt S13 fortgesetzt, in dem das entsprechende Leuchtbild, also eine Matrix der Steuerparameter, an die Steuerelektronik 6 des Scheinwerfers 2 übermittelt wird.

Soll jedoch ein dynamisches Fernlicht abgestrahlt werden, so wird das Verfahren mit Schritt S8 fortgesetzt. In diesem sollen zunächst vorläufige Steuerparameter für die Leuchtsegmente 19 derart bestimmt werden, dass alle Leuchtsegmente 19 unterhalb der Linie 21 in Fig. 2, also die Leuchtsegmente 19 in den Bereichen 22 und 28, mit einer vorgegebenen Helligkeit leuchten, während den oberhalb der Linie 21 liegenden Leuchtsegmenten 19 Steuerparameter zugeordnet werden, die einer geringeren Helligkeit entsprechen beziehungsweise bei denen die entsprechenden Leuchtsegmente deaktiviert sind. Wie durch die Pfeile 23 angedeutet ist, ist die Form der Begrenzungslinie 21 jedoch in Abhängigkeit des Azimutwinkels verschiebbar, so dass eine abgestrahlte Lichtverteilung nach links oder rechts verschwenkt werden kann, um ein Kurvenlicht zu realisieren.

In Schritt S8 wird für das jeweilige Leuchtsegment 19 ermittelt, ob dieses unterhalb der entsprechend angepassten Linie 21 liegt oder nicht. Um dies zu überprüfen, kann eine mathematische Bedingung vorgegeben werden, die in Abhängigkeit des Azimutwinkels und der Leuchtsegmentinformation ermittelt, ob das jeweilige Leuchtsegment 19 unterhalb der Linie 21 liegt. Die vorläufigen Steuerparameter werden in den Bildspeicher 16 geschrieben.

In Schritt S9 wird für das jeweilige Leuchtsegment 19 überprüft, ob in dem durch das Leuchtsegment 19 ausgeleuchteten Winkelbereich ein Objekt der durch die Fahrzeugeinrichtung 8 bereitgestellten Objektliste liegt, für das eine Blendung vermieden werden soll. Ist dies der Fall, so wird in Schritt S10 der Steuerparameter für das entsprechende Leuchtsegment 19 auf einen vorgegebenen Wert gesetzt, wodurch, wenn das Leuchtsegment 19 in den Bereichen 22, 28 liegt, dessen Leuchthelligkeit verringert werden kann, um eine Blendung zu vermeiden. Dies ist in Fig. 2 beispielhaft für die Leuchtsegmente 19 im Bereich 25 dargestellt, deren Leuchthelligkeit verringert wird, um eine Blendung des Fahrers eines Kraftfahrzeugs zu verhindern.

Wird in Schritt S9 ermittelt, dass für das jeweilige Leuchtsegment kein Objekt vorhanden ist, für das eine Blendung vermieden werden soll, so wird in Schritt S11 überprüft, ob ein Objekt in der durch die Fahrzeugeinrichtung 9 bereitgestellten Objektliste, die zu markierenden Objekte umfasst, vorliegt, dass im dem dem Leuchtsegment 19 zugeordneten Raumwinkelbereich liegt. Ist dies der Fall, so wird dem Leuchtsegment 19 in Schritt S12 ein Steuerparameter zugeordnet, durch den die Leuchthelligkeit des entsprechenden Leuchtsegments 19 erhöht werden kann. Die ist in Fig. 2 beispielhaft für die Leuchtsegmente 19 in dem Bereich 27 dargestellt, in dem ein Fußgänger markiert werden soll.

Durch die Vorgabe von vorläufigen Steuerparametern in Schritt S8 und die unter Umständen erfolgenden Anpassungen in Schritt S10 oder Schritt S12 wird ein Leuchtbild generiert, das einerseits das grundsätzliche Leuchtmuster eines Fernlichts, das eine zukünftige Kurvenfahrt berücksichtigt, bereitstellt, und andererseits eine Blendung von weiteren Verkehrsteilnehmern vermeidet und bestimmte Umfeldobjekte markiert. Das Leuchtbild wird in Schritt S13 über den Fahrzeugbus an die Steuerelektronik 6 des Scheinwerfers 2 übermittelt, um dieses Leuchtbild abzustrahlen.

## Patentansprüche

1. Kraftfahrzeug mit wenigstens einem Scheinwerfer (2) zum Beleuchten eines Fahrzeugumfelds des Kraftfahrzeugs (1) und einer Steuereinrichtung (3) zur Steuerung des Scheinwerfers (2), wobei der Scheinwerfer (2) mehrere matrixartig angeordnete Leuchtsegmente (19) umfasst, die durch die Steuereinrichtung (3) zur Bereitstellung einer für die einzelnen Leuchtsegmente (19) separat vorgebbaren Leuchthelligkeit separat ansteuerbar sind, wobei der die jeweilige Leuchthelligkeit vorgebende Steuerparameter für jedes der Leuchtsegmente (19) durch die Steuereinrichtung (3) in wenigstens einem Rechenschritten in Abhängigkeit von Eingangsparametern berechenbar ist, die durch wenigstens eine Fahrzeugeinrichtung (7, 8, 9) bereitstellbar sind,
**dadurch gekennzeichnet,**
**dass** der Rechenschritt oder wenigstens einer der Rechenschritte durch die Steuereinrichtung (3) für mehrere der Leuchtsegmente parallel durchführbar ist, wobei die Eingangsparameter oder durch die Steuereinrichtung (3) aus den Eingangsparametern ermittelte 2D-Vektordaten eine 2D-Polygonliste von 2D-Polygonen einer Lichtverteilung beschreiben, wobei den 2D-Polygonen jeweils unterschiedliche Steuerparameter oder Steuerparameterverläufe zugeordnet sind, wobei durch die Steuereinrichtung (3) der jeweilige Steuerparameter der Leuchtsegmente (19) parallel für mehrere Leuchtsegmente (19) aus der 2D-Polygonliste berechenbar ist.

2. Kraftfahrzeug nach Anspruch 1,
**dadurch gekennzeichnet,**
**dass** die Steuereinrichtung (3) ein Grafikprozessor (15) ist oder einen Grafikprozessor (15) umfasst, wobei der parallel durchführbare Rechenschritt für die mehreren Leuchtsegmente (19) durch den Grafikprozessor (15) parallel durchführbar ist.

3. Kraftfahrzeug nach Anspruch 1 oder 2,
**dadurch gekennzeichnet,**
**dass** die Steuereinrichtung (3) dazu eingerichtet ist, den parallel durchgeführten Rechenschritt oder wenigstens einen der parallel durchgeführten Rechenschritte durchzuführen, indem eine Rechenanweisung durch die Steuereinrichtung ausgeführt wird, die aus mehreren jeweils einem der Leuchtsegmente (19) zugeordneten Rechenparametern parallel jeweils einen dem jeweiligen Leuchtsegment (19) zugeordneten Ergebnisparameter ermittelt, wobei der Rechenparameter durch die Eingangsparameter vorgegebenen oder aus diesen in wenigstens einem vorangehenden Rechenschritt berechneten wird und der jeweilige Steuerparameter durch den Ergebnisparameter vorgegeben oder in Abhängigkeit des Ergebnisparameters in einem nachfolgenden Rechenschritt berechnet wird.

4. Kraftfahrzeug nach einem der vorangehenden Ansprüche,
**dadurch gekennzeichnet,**
**dass** das Ergebnis des parallel durchgeführten Rechenschritts oder wenigstens eines der parallel durchgeführten Rechenschritte für jedes der Leuchtsegmente (19) von einer wenigstens eine Eigenschaft des jeweiligen Leuchtsegments (19) beschreibenden, vorgegebenen Leuchtsegmentinformation abhängig ist.

5. Kraftfahrzeug nach einem der vorangehenden Ansprüche,
**dadurch gekennzeichnet,**
**dass** durch die Steuereinrichtung (3) in Abhängigkeit der Eingangsparameter eines von mehreren vorgegebenen Leuchtmustern auswählbar ist, das einen durch die Leuchtsegmente (19) auszuleuchtenden Raumwinkel beschreibt, wobei das Ergebnis des parallel durchgeführten Rechenschritts oder wenigstens eines der parallel durchgeführten Rechenschritte für zumindest einen Teil der Leuchtsegmente (19) von dem gewählten Leuchtmuster abhängig ist.

6. Kraftfahrzeug nach einem der vorangehenden Ansprüche,
**dadurch gekennzeichnet,**
**dass** durch die Fahrzeugeinrichtung (7) die Eingangsparameter derart vorgebbar sind, dass sie von einer momentanen und/oder einer prognostizierten zukünftigen Fahrzeugbewegung abhängende Bewegungsdaten umfassen, wobei das Ergebnis des parallel durchgeführten Rechenschritts oder wenigstens eines der parallel durchgeführten Rechenschritte für zumindest einen Teil der Leuchtsegmente (19) von den Bewegungsdaten abhängig ist.

7. Kraftfahrzeug nach einem der vorangehenden Ansprüche,
**dadurch gekennzeichnet,**
**dass** durch die Fahrzeugeinrichtung (8, 9) die Eingangsparameter derart vorgebbar sind, dass sie für wenigstens ein relevantes Objekt (24, 26) im Fahrzeugumfeld jeweils eine das Objekt (24, 26) betreffende Objektinformation umfassen, wobei das Ergebnis des parallel durchgeführten Rechenschritts oder wenigstens eines der parallel durchgeführten Rechenschritte für zumindest einen Teil der Leuchtsegmente (19) von der Objektinformation abhängig ist.

8. Kraftfahrzeug nach einem der vorangehenden Ansprüche,
**dadurch gekennzeichnet,**
**dass** durch die Steuereinrichtung (3) als Steuerparameter eine Pulsweite für eine Steuerspannung und/oder einen Steuerstrom des jeweiligen Leuchtsegments (19) berechenbar ist.

## Claims

1. Motor vehicle having at least one headlight (2) for illuminating the surroundings of the motor vehicle (1), and a control apparatus (3) for controlling the headlight (2), wherein the headlight (2) comprises a plurality of lighting segments (19) which are arranged in the manner of a matrix and can be actuated separately by the control apparatus (3) in order to provide a lighting brightness which can be predefined separately for the individual lighting segments (19), wherein the control parameter predefining the respective lighting brightness for each of the lighting segments (19) can be calculated by the control apparatus (3) in at least one computing step as a function of input parameters which can be provided by at least one vehicle apparatus (7, 8, 9),
**characterised in that**
the computing step or at least one of the computing steps can be executed in parallel by the control apparatus (3) for a plurality of the lighting segments, wherein the input parameters or 2D vector data determined from the input parameters using the control apparatus (3), describe a 2D polygon list of 2D polygons of a light distribution, wherein different control parameters or control parameter profiles are associated with each of the 2D polygons, wherein the respective control parameter of the lighting segments (19) may be calculated in parallel for a plurality of lighting segments (19) from the 2D polygon list using the control apparatus (3).

2. Motor vehicle according to claim 1,
**characterised in that**
the control apparatus (3) a graphics processor (15) is or comprises a graphics processor (15), wherein the computing step which can be executed in parallel can be executed in parallel by the graphics processor (15) for the plurality of lighting segments (19).

3. Motor vehicle according to claim 1 or 2,
**characterised in that**
the control apparatus (3) is configured to execute the computing step executed in parallel or at least one of the computing steps executed in parallel by performing a computing instruction that determines in parallel, from a plurality of computing parameters each associated with one of the lighting segments (19), a result parameter associated with the respective lighting segment (19), wherein the computing parameter is predefined by the input parameters, or calculated therefrom in at least one preceding computing step, and the respective control parameter is predefined by the result parameter, or calculated in a subsequent computing step as a function of the result parameter.

4. Motor vehicle according to any of the preceding claims,
**characterised in that**
for each of the lighting segments (19), the result of the computing step executed in parallel or at least one of the computing steps executed in parallel is a function of predefined lighting segment information describing at least one property of the respective lighting segment (19).

5. Motor vehicle according to any of the preceding claims,
**characterised in that**
the control apparatus (3) can be used to select, as a function of the input parameters, one of a plurality of predefined light patterns that describes a solid angle to be illuminated by the lighting segments (19), wherein, for at least a portion of the lighting segments (19), the result of the computing step executed in parallel or of at least one of the computing steps executed in parallel is a function of the selected light pattern.

6. Motor vehicle according to any of the preceding claims,
**characterised in that**
the input parameters can be predefined by the vehicle apparatus (7) such that they comprise movement data that are a function of a current and/or a predicted future vehicle movement, wherein, for at least a portion of the lighting segments (19), the result of the computing step executed in parallel or of at least one of the computing steps executed in parallel is a function of the movement data.

7. Motor vehicle according to any of the preceding claims,
**characterised in that**
the input parameters can be predefined by the vehicle apparatus (8, 9) such that they comprise, for at least one relevant object (24, 26) in the vehicle surroundings, object information relating to the object (24, 26), wherein, for at least a portion of the lighting segments (19), the result of the computing step executed in parallel or of at least one of the computing steps executed in parallel is a function of the object information.

8. Motor vehicle according to any of the preceding claims,
**characterised in that**
using the control apparatus (3), a pulse width can be calculated, as a control parameter, for a control voltage and/or a control current of the respective lighting segment (19).

## Revendications

1. Véhicule automobile avec au moins un phare (2) pour éclairer un environnement de véhicule du véhicule automobile (1) et un dispositif de commande (3) pour commander le phare (2), dans lequel le phare (2) comprend plusieurs segments lumineux (19) disposés en matrice, qui peuvent être commandés séparément par le dispositif de commande (3) pour fournir une luminosité qui peut être prédéterminée séparément pour les segments lumineux individuels (19), dans lequel le paramètre de commande pour chacun des segments lumineux (19), qui prédétermine la luminosité respective, peut être calculé par le dispositif de commande (3) en au moins une étape de calcul en fonction de paramètres d'entrée qui peuvent être fournis par au moins un dispositif du véhicule (7, 8, 9),
**caractérisé en ce**
**que** l'étape de calcul ou au moins une des étapes de calcul peut être exécutée en parallèle par le dispositif de commande (3) pour plusieurs segments lumineux, dans lequel les paramètres d'entrée ou les données vectorielles 2D déterminées par le dispositif de commande (3) à partir des paramètres d'entrée décrivent une liste de polygones 2D d'une répartition de la lumière, dans lequel différents paramètres de commande ou parcours de paramètres de commande sont affectés aux polygones 2D, dans lequel le paramètre de commande respectif des segments lumineux (19) peut être calculé en parallèle pour plusieurs segments lumineux (19) à partir de la liste de polygones 2D par le dispositif de commande (3).

2. Véhicule automobile selon la revendication 1,
**caractérisé en ce**
**que** le dispositif de commande (3) est un processeur graphique (15) ou comprend un processeur graphique (15), dans lequel l'étape de calcul qui peut être exécutée en parallèle pour les plusieurs segments lumineux (19) peut être exécutée en parallèle par le processeur graphique (15).

3. Véhicule automobile selon la revendication 1 ou 2,
**caractérisé en ce**
**que** le dispositif de commande (3) est configuré pour exécuter l'étape de calcul exécutée en parallèle ou au moins une des étapes de calcul exécutées en parallèle en exécutant une instruction de calcul du dispositif de commande, qui détermine un paramètre de résultat affecté au segment lumineux (19) respectif en parallèle à partir de plusieurs paramètres de calcul affectés respectivement à l'un des segments lumineux (19), dans lequel le paramètre de calcul est prédéfini par les paramètres d'entrée ou calculé à partir de ceux-ci dans au moins une étape de calcul précédente, et le paramètre de commande respectif est prédéfini par le paramètre de résultat ou calculé dans une étape de calcul suivante en fonction du paramètre de résultat.

4. Véhicule automobile selon l'une quelconque des revendications précédentes,
**caractérisé en ce**
**que** le résultat de l'étape de calcul exécutée en parallèle ou au moins une des étapes de calcul exécutées en parallèle pour chacun des segments lumineux (19) dépend d'une information prédéfinie sur les segments lumineux décrivant au moins une propriété du segment lumineux respectif (19).

5. Véhicule automobile selon l'une quelconque des revendications précédentes,
**caractérisé en ce**
**que**, en fonction des paramètres d'entrée, un parmi plusieurs motifs lumineux prédéfinis peut être sélectionné par le dispositif de commande (3), qui décrit un angle solide à éclairer par les segments lumineux (19), dans lequel le résultat de l'étape de calcul exécutée en parallèle ou au moins une des étapes de calcul exécutées en parallèle pour au moins une partie des segments lumineux (19) dépend du motif lumineux sélectionné.

6. Véhicule automobile selon l'une quelconque des revendications précédentes,
**caractérisé en ce**
**que** les paramètres d'entrée peuvent être prédéfinis par le dispositif de véhicule (7) de sorte qu'ils comprennent des données de mouvement dépendant d'un mouvement instantané et/ou d'un mouvement futur prévu du véhicule, dans lequel le résultat de l'étape de calcul exécutée en parallèle ou au moins une des étapes de calcul exécutées en parallèle pour au moins une partie des segments lumineux (19) dépend des données de mouvement.

7. Véhicule automobile selon l'une quelconque des revendications précédentes,
**caractérisé en ce**
**que** les paramètres d'entrée peuvent être prédéfinis par le dispositif de véhicule (8, 9) de sorte qu'ils comprennent chacun, pour au moins un objet pertinent (24, 26) dans l'environnement de véhicule, de l'information d'objet concernée (24, 26), dans lequel le résultat de l'étape de calcul exécutée en parallèle ou au moins une des étapes de calcul exécutées en parallèle pour au moins une partie des segments lumineux (19) dépend de l'information d'objet.

8. Véhicule automobile selon l'une quelconque des revendications précédentes,
**caractérisé en ce**
**qu'**une largeur d'impulsion pour une tension de commande et/ou un courant de commande du segment lumineux respectif (19) peut être calculée par le dispositif de commande (3) comme paramètre de commande.
